# FASCICULE DE BREVET EUROPEEN

(11) **EP 1 918 601 B1**
(45) Date de publication et mention de la délivrance du brevet: **11.11.2009**
(21) Numéro de dépôt: 07119319.7
(22) Date de dépôt: 25.10.2007
(51) Int. Cl.: F16D 23/14

(54) **Butée d'embrayage**
Kupplungsdrucklager
Throw-out bearing

(30) Priorité: 30.10.2006 FR 0654636
(43) Date de publication de la demande: 07.05.2008
(73) Titulaire: Valeo Embrayages, 80009 Amiens (FR)
(72) Inventeur: Duchatel, Stéphane Valeo Embrayages, 80000 Amiens (FR)
(74) Mandataire: Lemaire, Marc

(56) Documents cités:
- FR-A- 2 660 034
- FR-A1- 2 826 416
- US-A- 4 883 154

## Description

La présente invention se rapporte à une butée d'embrayage.

L'une des opérations de montage du groupe moto-propulseur d'un véhicule automobile comporte, dans beaucoup de cas, une étape consistant à positionner la boîte de vitesses par rapport à l'embrayage.

Un tel positionnement est fréquemment effectué au moyen d'un tube-guide solidaire du carter de la boîte de vitesses, apte à pénétrer à l'intérieur de la butée d'embrayage.

Une butée d'embrayage et un tube-guide sont décrits dans le document US 4 883 154.

Lors de cette opération, on a pu constater qu'il arrivait fréquemment que le tube-guide d'embrayage endommage une douille en matière plastique, disposée à l'intérieur du manchon de la butée d'embrayage.

La présente invention a notamment pour but de remédier à cet inconvénient.

On atteint ce but de l'invention avec une butée d'embrayage, comprenant un manchon et une douille logée à l'intérieur de ce manchon et destinée à recevoir un tube-guide d'embrayage, telle que ledit manchon comporte un épaulement de protection de ladite douille du côté de la réception dudit tube-guide, caractérisée en ce que ledit épaulement présente un chanfrein.

La présence d'un tel épaulement, protégé par un chanfrein, obtenu par moulage ou usinage de la matière formant le manchon, constitue un bouclier pour la partie de la douille exposée aux chocs du tube-guide lors de la mise en place de ce dernier.

Ainsi, cette douille n'est plus exposée directement à ces chocs, et l'on peut éviter de la sorte de la casser lors de la mise en place du tube-guide.

Suivant d'autres caractéristiques et avantages optionnels de la butée d'embrayage selon l'invention :
- ladite douille comprend un premier chanfrein présentant sensiblement la même inclinaison que le chanfrein dudit épaulement ; ce cas est particulièrement avantageux en ce qu'il permet une protection de la douille et une mise en place du tube-guide améliorées,
- le premier chanfrein de ladite douille est situé dans le prolongement du chanfrein dudit épaulement,
- le premier chanfrein de ladite douille est décalé radialement vers l'extérieur par rapport au chanfrein dudit épaulement,
- ladite inclinaison est située de 10 ° à 45 °, de préférence entre 10 ° et 45 °, et de 10 ° à 30 °, de préférence entre 15 ° et 30 ° par rapport à l'axe de ladite butée,
- ladite douille comprend un deuxième chanfrein disposé entre ledit premier chanfrein et le chanfrein formé sur ledit épaulement, ce deuxième chanfrein étant plus incliné que le premier chanfrein,
- la face intérieure dudit manchon et la face extérieure de ladite douille comportent des moyens de coopération complémentaires.

Les caractéristiques et avantages de la présente invention apparaîtront à la lecture de la description qui va suivre et à l'examen des figures ci-annexées, dans lesquelles :
- la figure 1 est une vue en coupe axiale d'une butée d'embrayage et d'un tube-guide de l'art antérieur,
- la figure 2 est une vue analogue d'une butée d'embrayage et d'un tube-guide selon l'invention,
- la figure 3 est une vue de détail de la zone D de la figure 2, et
- la figure 4 est une vue analogue à la figure 3 d'un autre mode de réalisation de la butée selon l'invention.

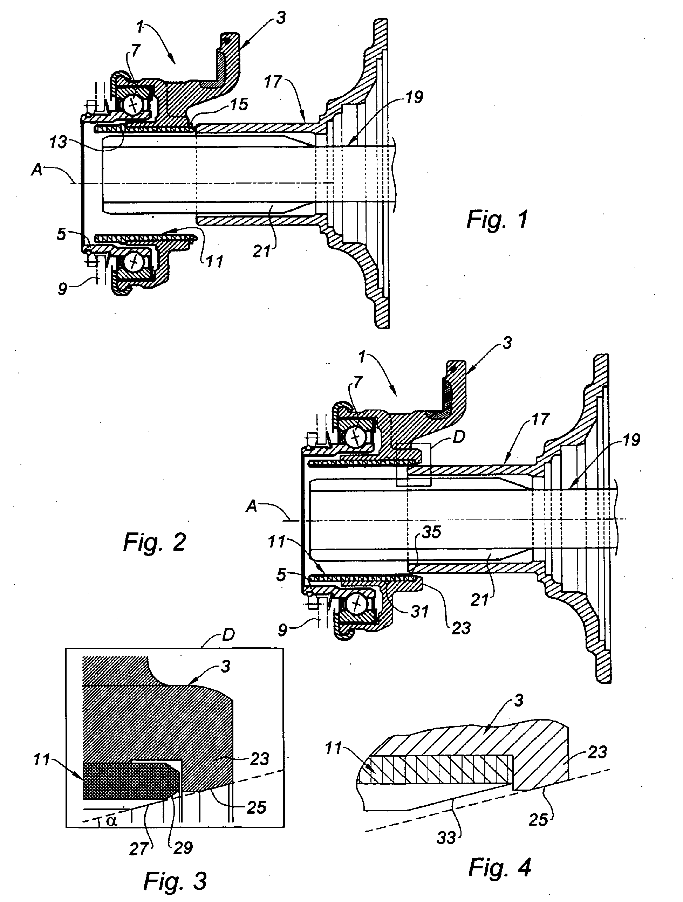

On se reporte à présent à la figure 1, sur laquelle on a représenté un dispositif de la technique antérieure.

On peut voir sur cette figure 1 une butée d'embrayage 1 comportant un manchon 3 apte à se mouvoir selon la direction de l'axe A de la butée sous l'action d'une fourchette d'embrayage (non représentée).

Une bague 5 est montée pivotante à l'intérieur du manchon 3 grâce à un roulement à billes 7.

La bague 5 coopère avec un diaphragme d'embrayage 9 représenté en pointillés sur la figure 1.

A l'intérieur du manchon 3 est également montée une douille 11 en matière plastique, bloquée axialement par rapport au manchon 3 grâce à d'une part un épaulement circulaire 13 et d'autre part un circlip 15 mis en place au moyen d'une pince à circlip appropriée.

Le tube-guide de boîte de vitesses 17 est monté sur un carter de boîte de vitesses non représenté.

A l'intérieur de ce tube-guide 17 s'étend l'arbre d'entrée 19 de la boîte de vitesses, muni de cannelures 21 destinées à coopérer avec l'embrayage.

Sur la figure 1, on a représenté le tube-guide 17 en cours d'accostage à l'intérieur de la douille 11.

Plus précisément, on a représenté ce tube-guide dans la configuration particulière où, avant de pénétrer à l'intérieur de la douille 11, il vient malencontreusement cogner la partie de la douille 11 située dans la région du circlip 15, saillante par rapport au manchon 3.

Dans cette situation particulière, étant donnée la masse importante de l'ensemble formé par le tube-guide 17 et la boîte de vitesses associée, il y a de très fortes chances pour que la partie saillante de la douille 11 soit endommagée, ce qui n'est évidemment pas acceptable dans le cadre d'un processus de fabrication industrielle.

On se reporte à présent aux figures 2 et 3, sur lesquelles on peut voir la solution apportée par l'invention au problème susmentionné.

Comme cela apparaît à l'examen de ces figures, le manchon 3 comporte un épaulement de protection 23 qui est rabattu radialement sur la douille 11 de manière à protéger la partie de cette douille susceptible d'être endommagée par le tube-guide 17.

L'épaulement 23 est de préférence formé d'un seul bloc avec le manchon 3 et peut être obtenu par moulage ou usinage.

Plus particulièrement, comme cela est visible sur la figure 3, on prévoit que l'épaulement 23 comporte un chanfrein 25 dont l'angle d'inclinaison α par rapport à l'axe A de la butée est situé de 10 ° à 45 °, et de préférence de 15 ° à 30 °.

De préférence également, la douille 11 présente elle-même un premier chanfrein 27 situé dans le prolongement du chanfrein 25 de l'épaulement 23, et présentant la même inclinaison.

On peut avantageusement prévoir que la douille 11 comporte un deuxième chanfrein 29, situé entre le premier chanfrein 27 et le chanfrein 25 de l'épaulement 23, l'angle d'inclinaison 29 de ce deuxième épaulement étant alors généralement supérieur à l'angle α cité.

La présence des chanfreins 25 et 27 facilite le guidage du tube-guide 17 vers l'intérieur de la douille 11, et le chanfrein 29 permet de ne pas pousser ou endommager cette douille. De manière avantageuse, et comme cela est visible sur la figure 2, la douille 11 peut être fixée à l'intérieur du manchon 3 grâce à des moyens de coopération complémentaires disposés respectivement sur la face intérieure du manchon 3 et sur la face extérieure de la douille 11.

Ces moyens de coopération complémentaires peuvent par exemple comprendre un bourrelet disposé à la périphérie de la douille 11, coopérant avec une rainure complémentaire 31 formée sur la surface intérieure du manchon 3.

On a représenté sur la figure 4 un mode de réalisation simplifié dans lequel la douille 11 comporte un unique chanfrein 33 présentant la même inclinaison que le chanfrein 25 de l'épaulement 23, et étant décalé radialement vers l'extérieur par rapport à ce chanfrein 25.

Ce mode de réalisation simplifié permet d'obtenir, avec un seul chanfrein 33, les fonctions de guidage et de prévention des chocs sur la douille obtenues avec les deux chanfreins 27, 29 du mode de réalisation précédent.

Avec les dispositions qui viennent d'être mentionnées, le tube-guide 17 peut pénétrer à l'intérieur de la douille 11 sans risque de choc et d'endommagement consécutif, comme cela est représenté à la figure 2 (tube-guide 17 en cours de pénétration à l'intérieur de la douille 11).

De optionnelle, on peut également prévoir que l'extrémité du tube-guide 17 qui pénètre à l'intérieur de la douille 11 présente un chanfrein 35, de manière à faciliter la pénétration de ce tube-guide à l'intérieur de la douille 11.

Bien entendu, la présente invention n'est nullement limitée aux modes de réalisation décrits et représentés, fournis à titre de simples exemples.

## Revendications

1. Butée d'embrayage (1), comprenant un manchon (3) et une douille (11) logée à l'intérieur de ce manchon (3) et destinée à recevoir un tube-guide d'embrayage (17), ledit manchon (3) comportant un épaulement (23) de protection de ladite douille (11) du côté de la réception dudit tube-guide (17), **caractérisée en ce que** ledit épaulement (23) présente un chanfrein (25).

2. Butée d'embrayage (1) selon la revendication 1, **caractérisée en ce que** ladite douille (11) comprend un premier chanfrein (27) présentant sensiblement la même inclinaison que le chanfrein (25) dudit épaulement (23).

3. Butée d'embrayage (1) selon la revendication précédente, **caractérisée en ce que** le premier chanfrein (27) de ladite douille (11) est situé dans le prolongement du chanfrein (25) dudit épaulement (23).

4. Butée d'embrayage (1) selon la revendication précédente, **caractérisée en ce que** le premier chanfrein (27) de ladite douille (11) est décalé radialement vers l'extérieur par rapport au chanfrein (25) dudit épaulement (23).

5. Butée d'embrayage (1) selon l'une quelconque des revendications 2 à 5, **caractérisée en ce que** ladite inclinaison est située entre 10 ° et 45 °, et de préférence entre 15 ° et 30 ° par rapport à l'axe (A) de ladite butée (1).

6. Butée d'embrayage (1) selon l'une 2 à 5 des revendications, **caractérisée en ce que** ladite douille (11) comprend un deuxième chanfrein (29) disposé entre ledit premier chanfrein (27) et le chanfrein (25) formé sur ledit épaulement (23), ce deuxième chanfrein (29) étant plus incliné que le premier chanfrein (27).

7. Butée d'embrayage (1) selon l'une quelconque des revendications précédentes, **caractérisée en ce que** la face intérieure dudit manchon (3) et la face extérieure de ladite douille (11) comportent des moyens de coopération complémentaires (31).

## Claims

1. Clutch bearing (1), comprising a sleeve (3) and a bush (11), which bush is accommodated inside this sleeve (3) and is designed to receive a clutch guide tube (17), the said sleeve (3) comprising a shoulder (23) to protect the said bush (11) on the side for receipt of the said guide tube (17), **characterised in that** the said shoulder (23) has a chamfer (25).

2. Clutch bearing (1) according to claim 1, **characterised in that** the said bush (11) comprises a first chamfer (27) which has substantially the same inclination as the chamfer (25) of the said shoulder (23).

3. Clutch bearing (1) according to the preceding claim, **characterised in that** the first chamfer (27) of the said bush (11) is situated in the extension of the chamfer (25) of the said shoulder (23).

4. Clutch bearing (1) according to the preceding claim, **characterised in that** the first chamfer (27) of the said bush (11) is offset radially towards the exterior relative to the chamfer (25) of the said shoulder (23).

5. Clutch bearing (1) according to any one of claims 2 to 4, **characterised in that** the said inclination is situated between 10° and 45°, and preferably between 15° and 30°, relative to the axis (A) of the said bearing (1).

6. Clutch bearing (1) according to one of claims 2 to 5, **characterised in that** the said bush (11) comprises a second chamfer (29) which is disposed between the said first chamfer (27) and the chamfer (25) which is formed on the said shoulder (23), this second chamfer (29) being more inclined than the first chamfer (27).

7. Clutch bearing (1) according to any one of the preceding claims, **characterised in that** the inner surface of the said sleeve (3) and the outer surface of the said bush (11) comprise complementary co-operation means (31).

## Patentansprüche

1. Kupplungslager (1), umfassend einen Stutzen (3) und eine Hülse (11), die im Inneren dieses Stutzens (3) angeordnet und dazu bestimmt ist, ein Führungs-Rohr (17) der Kupplung aufzunehmen, wobei der Stutzen (3) auf der Seite der Aufnahme des Führungs-Rohrs (17) einen Vorsprung (23) zum Schutz der Hülse (11) aufweist, **dadurch gekennzeichnet, dass** der Vorsprung (23) eine Fase (25) aufweist.

2. Kupplungslager (1) nach Anspruch 1, **dadurch gekennzeichnet, dass** die Hülse (11) eine erste Fase (27) umfasst, die in etwa die gleiche Neigung aufweist wie die Fase (25) des besagten Vorsprungs (23).

3. Kupplungslager (1) nach dem vorhergehenden Anspruch, **dadurch gekennzeichnet, dass** die erste Fase (27) der Hülse (11) in der Verlängerung der Fase (25) des besagten Vorsprungs (23) angeordnet ist.

4. Kupplungslager (1) nach dem vorhergehenden Anspruch, **dadurch gekennzeichnet, dass** die erste Fase (27) der Hülse (11) relativ zu der Fase (25) des besagten Vorsprungs (23) radial nach außen versetzt ist

5. Kupplungslager (1) nach einem der Ansprüche 2 bis 4, **dadurch gekennzeichnet, dass** die besagte Neigung bezogen auf die Achse (A) des Lagers zwischen 10° und 45°, vorzugsweise zwischen 15° und 30° liegt.

6. Kupplungslager (1) nach einem der Ansprüche 2 bis 5, **dadurch gekennzeichnet, dass** die Hülse (11) eine zweite Fase (29) umfasst, die zwischen der ersten Fase (27) und der an dem besagten Vorsprung (23) ausgeformten Fase (25) liegt, wobei diese zweite Fase (29) stärker geneigt ist als die erste Fase (27).

7. Kupplungslager (1) nach einem der vorangehenden Ansprüche, **dadurch gekennzeichnet, dass** Innenseite des Stutzens (3) und die Außenseite der Hülse (11) komplementäre Kooperationsmittel (31) umfassen.
